# EUROPÄISCHE PATENTSCHRIFT

(11) **EP 2 308 666 B1**
(45) Veröffentlichungstag und Bekanntmachung des Hinweises auf die Patenterteilung: **11.11.2015**
(21) Anmeldenummer: 10401169.7
(22) Anmeldetag: 28.09.2010
(51) Int. Cl.: B29C 47/56, B29C 47/06, B29C 47/08

(54) **Spritzkopf sowie eine mit einem solchen Spritzkopf ausgestattete Extrusionsvorrichtung**
Extrusion head and extrusion device comprising such an extrusion head
Tête d'extrusion et de dispositif d'extrusion comprenant une telle tête d'extrusion

(30) Priorität: 09.10.2009 DE 102009048980
(43) Veröffentlichungstag der Anmeldung: 13.04.2011
(73) Patentinhaber: TROESTER GmbH & Co. KG, 30519 Hannover (DE)
(72) Erfinder: Hoffmann, Wieland, 30539 Hannover (DE)
(74) Vertreter: Scheffler, Jörg

(56) Entgegenhaltungen:
- EP-A1- 0 407 756
- CN-C- 100 486 794
- DD-A1- 244 722
- DE-A1- 3 430 062
- GB-A- 2 131 734
- US-A- 4 643 659
- US-B1- 6 951 233

## Beschreibung

Die Erfindung betrifft einen insbesondere für eine oder mehrere Komponenten bestimmten Spritzkopf für einen oder mehrere Extruder. Weiterhin betrifft die Erfindung eine für eine oder mehrere Komponenten bestimmte Extrusionsvorrichtung mit einem oder mehreren Extrudern und einem Spritzkopf.

Eine derartige Extrusionsvorrichtung mit einem Spritzkopf ist beispielsweise für die Herstellung eines Laufstreifens für Autoreifen erforderlich. Diese bestehen heute bereits aus vier oder mehr verschiedenartigen, miteinander verbundenen Mischungen, nämlich der Laufflächenmischung, die aus hochabriebfestem Material besteht, der Schulterstreifenmischung, die aus sehr walkfähigem Material besteht, der sogenannten Untergummimischung, die als Grundlage für die Lauffläche dient und aus einer weicheren Mischung als die Lauffläche bestehen kann, und der sogenannten Kissengummimischung für eine gute Haftung an der Karkasse. Es müssen also vier oder mehr in ihrer Viskosität stark unterschiedliche Mischungen in einem Spritzkopf zu einem Laufstreifenprofil zusammengeführt werden.

Elektrostatische Ladungen, die in Kraftfahrzeugen erzeugt werden, führen nicht nur zu elektrischen Entladungen, sondern infolge möglicher Funkenbildungen zu einer Beeinträchtigung der Fahrzeugfunktionen. Solche Probleme ergeben sich nicht, wenn der Reifen aus einem Gummi besteht, der einen großen Anteil Ruß enthält, weil der Reifen dadurch eine ausreichende Leitfähigkeit aufweist.

Aus wirtschaftlichen Gründen sowie zu Umweltschutzzwecken besteht eine zunehmende Nachfrage nach Reifen, die den Kraftstoffverbrauch von Kraftfahrzeugen reduzieren können.

Bei Reifen, die einen niedrigen Rollwiderstand aufweisen, wird jedoch ein erheblicher Anteil des Rußes durch Silika ersetzt, was dazu führt, dass der elektrische Widerstand des Laufflächengummis zunimmt.

Aus der DE 195 20 996 C2 ist beispielsweise ein Fahrzeugreifen mit einem Laufstreifen aus elektrisch isolierendem oder schlecht leitendem Material bekannt, mit einer unterhalb des Laufstreifens angeordneten, elektrisch gut leitenden Schicht, mit einem Streifen aus elektrisch gut leitendem Material, der einen Teil der Reifenlauffläche bildet, und mit einer zwischen den beiden aneinander stoßenden Stirnflächen des ringförmigen Laufstreifens angeordneten Schicht aus elektrisch gut leitendem Material. Die elektrisch gut leitende Schicht erstreckt sich über den Reifenumfang betrachtet zumindest bereichsweise bis in die Reifenlauffläche hinein und ist mit einem weiteren elektrisch gut leitenden Reifenbestandteil elektrisch verbunden, der seinerseits mit der Fahrzeugkarosserie elektrisch gut leitend verbunden ist.

Weiterhin offenbart auch bereits die EP 1 060 089 B1 einen Reifen mit einem mehrschichtigen Aufbau.

Die Herstellung von aus bis zu vier verschiedenen Mischungen bestehenden Reifenbauteilen erfolgt in nur einem Arbeitsgang mit Mehrfach-Spritzköpfen. Diese mit zwei, drei, vier oder auch mehr fest übereinander angebrachten Extrudern und passenden Spritzköpfen ausgerüsteten Aggregate haben die älteren Aufstellungsvarianten (Boxer- oder Y-Aufstellung) abgelöst. Die Extruderanordnung in einer Achse übereinander gestattet auch eine symmetrische Gestaltung der Fließkanäle. Die Kanäle sind mit Bohrungen für den Einsatz von Messsensoren zur Massedruck- und -temperaturmessung ausgestattet. Die Fließkanaleinsätze sind im jeweiligen Kopfunterteil verschraubt und können dadurch schnell gewechselt werden.

Die EP 0 925 903 A1 bezieht sich auf ein Verfahren und eine Vorrichtung zur Herstellung eines Luftreifens, der einen Laufflächengummi umfasst, der elektrostatische Ladungen an die Straßenoberfläche ableiten kann. Es wird eine Vorrichtung zur Herstellung eines unvulkanisierten Laufflächengummis vorgeschlagen, wobei mindestens ein schlecht leitender Gummi und mindestens ein gut leitender Gummi einer jeweiligen Extrudereinheit auf der stromaufwärts gelegenen Seite eines gemeinsamen Extrusionskopfs zugeführt werden. Die Gummis fließen durch jeweilige Durchgänge in dem Extrusionskopf und werden auf der Rückseite einer Extrusionsdüse miteinander vereinigt, bevor sie aus der Extrusionsdüse als ein integrierter Verbundkörper extrudiert werden.

Die EP 1 270 174 A1 betrifft ein Extrusionswerkzeug für Reifenlaufflächen, welches einen Außenlaufflächendurchlass zum Formen einer elektrisch nicht-leitenden Gummi-Außenlauffläche sowie einen unteren Unterlaufflächendurchlass zum Formen einer unteren Schicht aus elektrisch leitendem Gummi umfasst.

Aus der GB 2 131 734 A ist eine Extruderanlage zum Herstellen von Flachprofilen aus zwei verschiedenartigen Mischungen bekannt. Der Strangpresskopf der Extruderanlage ist in zwei übereinander angeordneten Ebenen geteilt. Der Mittelteil des Kopfs ist fest mit den Extrudern verbunden, während das Oberteil und das Unterteil verschwenkbar ausgebildet sind.

Weitere Extruderanlage zum Herstellen von Flachprofilen sind aus den Druckschriften US 6 951 233 B1, DE 34 30 062 A1, CN 100 486 794 C und EP 0 407 756 A1 bekannt.

In vielen Betrieben wird relativ häufig ein Profilstreifenwechsel vorgenommen, beispielsweise um Laufstreifen für unterschiedlich große PKW- bzw. LKW-Reifen oder Spezialreifen für Erdbewegungsmaschinen herzustellen.

Jeder Wechsel der Laufstreifenart hat zur Folge, dass sowohl die Fließkanaleinsätze als auch die Vorformleiste ausgewechselt werden müssen.

Während es in der Praxis bereits gelingt, vier Extruder in einer gemeinsamen Extrusionsvorrichtung zu vereinigen, führt die Anordnung eines weiteren Extruders als Zusatzextruder zu einem erhöhten Platzbedarf durch eine sogenannte Huckepackanordnung. Zu diesem Zweck wird der Zusatzextruder oftmals vor der Auslassöffnung mit entgegengesetzter oder seitlicher Förderrichtung angeordnet, sodass dessen Stoffstrom umgelenkt werden muss. Diese Anordnung erweist sich in der Praxis jedoch als hinderlich, da sie den freien Zugang zu dem Auslassbereich der Extrusionsvorrichtung erschwert.

Der Erfindung liegt die Aufgabe zugrunde, einen einfachen Spritzkopf für mehrere Extruder zu schaffen, durch den die praktische Handhabung erleichtert wird. Weiterhin soll eine einfache Möglichkeit zur Anordnung eines Zusatzextruders an einer Extrusionsvorrichtung mit insbesondere mehreren Extrudern ohne Einschränkung des Zugangs geschaffen werden.

Die erstgenannte Aufgabe wird erfindungsgemäß mit einem Spritzkopf gemäß den Merkmalen des Anspruchs 1 gelöst. Die weitere Ausgestaltung der Erfindung ist den Unteransprüchen 2 bis 9 zu entnehmen.

Erfindungsgemäß ist also ein Spritzkopf vorgesehen, der eine Durchbrechung zu zumindest einem Fließkanal oder einem zwischen der Fertigleiste und dem Fließkanal angeordneten Überlappungsstück aufweist, welche eine Schneckenwelle eines Zusatzextruders zumindest abschnittsweise aufnimmt.

Hierdurch wird es erstmals möglich, mit geringem Aufwand ohne Einschränkung der Zugänglichkeit den Zusatzextruder anzuordnen. Demgegenüber ging die Fachwelt bisher davon aus, dass lange Zuströmkanäle in dem Spritzkopf schon allein deswegen ungünstig sind, weil sich daraus aufgrund der Druckverhältnisse eine zu lange antriebslose Transportstrecke zwischen der Düse des Zusatzextruders und der Fertigleiste der Extrusionsvorrichtung mit einem hohen Fließwiderstand ergibt. Demgegenüber reicht jedoch erfindungsgemäß die Schneckenwelle des Zusatzextruders weit in die Durchbrechung hinein, sodass die antriebslose Strecke auf ein Minimum reduziert ist. Bei dieser Gestaltung erstreckt sich also der Prozessteil des Zusatzextruders in den Spritzkopf hinein.

Weiterhin ging die Fachwelt davon aus, dass die Anordnung eines Zusatzextruders mit einem die Schneckenwelle einschließenden Gehäuse nicht nur eine Umgestaltung, sondern auch eine erhebliche und inakzeptable Schwächung des Spritzkopfs zur Folge haben würde, wenn die Düse dieses Zusatzextruders in der Nähe der Fließkanäle der Extrusionsvorrichtung münden sollte.

Demgegenüber wird erfindungsgemäß zudem durch den Wegfall eines separaten Gehäuses für die Schneckenwelle des Zusatzextruders ein einfacher und kostengünstiger Aufbau erreicht, der auch bei vorhandenen Spritzköpfen grundsätzlich nachrüstbar ist. Die Temperierung einer Zylinderbuchse des Zusatzextruders kann dabei zugleich durch den Spritzkopf erfolgen.

Dabei mündet die Durchbrechung vorzugsweise in einen von den übrigen Fließkanälen separierten Fließkanal, sodass also die Stoffströme erst im Werkzeug zusammengeführt werden.

Alternativ zu der Zuführung des Stoffstroms des Zusatzextruders zu dem Fließkanal der Extrusionsvorrichtung kann der Stoffstrom auch direkt in das Überlappungsstück oder die Kassette (Preformer) in der Nähe der Fertigleiste zugeführt werden.

Erfindungsgemäss weist der Spritzkopf zumindest zwei relativ zueinander bewegliche, insbesondere mittels eines jeweiligen Gelenks schwenkbewegliche Kopfteile auf, wobei die Durchbrechung in zumindest einem Kopfteil angeordnet ist. Der entsprechende Kopfteil kann dann bedarfsweise ausgetauscht werden, um so die Nachrüstung ebenso wie die Anpassungsmöglichkeit an unterschiedliche Einsatzzwecke wesentlich zu vereinfachen. Insbesondere wird auf diese Weise eine einfache Handhabung realisierbar. Da hierbei der Zusatzextruder gemeinsam mit dem ihn tragenden Kopfteil verschwenkbar ist, wird der Zugang zu dem Auslassbereich, beispielsweise zu Reinigungszwecken, nicht beeinträchtigt.

Die Durchbrechung könnte grundsätzlich eine beliebige, auch nicht rotationssymmetrische Querschnittsform aufweisen, wobei zur Aufnahme der Schneckenwelle eine entsprechende, einen zylindrischen Innenquerschnitt aufweisende Hülse erforderlich ist. Besonders Erfolg versprechend ist es hingegen, wenn die Durchbrechung zylinderförmig ausgeführt und beispielsweise durch eine Bohrung in dem Spritzkopf oder dem Kopfteil hergestellt ist, sodass diese im Wesentlichen dem Querschnitt der Schneckenwelle entspricht oder größer bemessen ist, sodass die Schneckenwelle in Richtung der Spitze ausgebaut werden kann.

Hierbei nimmt gemäß einer weiteren, besonders praxisrelevanten Ausgestaltung der Erfindung die Zylinderhülse als ein austauschbares Verschleißteil in der Durchbrechung die Schneckenwelle zumindest abschnittsweise auf, wobei mittels der Zylinderhülse zugleich auch die Anpassung an unterschiedliche Schneckenwellen erreicht werden kann. Hierdurch können Schneckenwellen mit unterschiedlichem Durchmesser eingesetzt werden, ohne die Durchbrechung ändern zu müssen.

Vorzugsweise dient hierzu eine als eine Reduzierhülse ausgeführte Zylinderhülse, sodass auch unterschiedliche Stoffströme durch entsprechend unterschiedlich bemessene Schneckenwellen zugeführt werden können.

Als weiterhin besonders Erfolg versprechend erweist es sich, wenn die Durchbrechung mit einem benachbarten Fließkanal einen spitzen Winkel einschließend parallel zu einer Hauptebene oder für eine seitliche Zuführung zu dieser geneigt angeordnet ist. Hierdurch wird eine problemlose Zuführung des mittels des Zusatzextruders bereitgestellten Stoffstroms in den Bereich der in der Praxis bevorzugt verwendeten Fließkanaleinsätze oder zu dem auch als Vorformleiste bezeichneten Überlappungsstück in Fließrichtung unmittelbar vor der Fertigleiste ermöglicht. Denkbar ist darüber hinaus eine Abzweigung von der Durchbrechung zur alternativen Strömungsumlenkung zu jeweils gewünschten Bereichen. Selbstverständlich können in dem Spritzkopf auch mehrere Durchbrechungen zur bedarfsweisen Aufnahme einer oder mehrerer Schneckenwellen in unterschiedlichen Winkelstellungen vorgesehen sein.

Die Orientierung der Durchbrechung entspricht dabei beispielsweise im Wesentlichen der größten Materialstärke des Spritzkopfs. Besonders praxisnah ist es hingegen auch, wenn die Durchbrechung im Wesentlichen parallel zu einer Vorderseite des Spritzkopfs oder Kopfteils angeordnet ist.

Eine andere, ebenfalls besonders zweckmäßige Ausgestaltung der vorliegenden Erfindung wird auch dann erreicht, wenn die Durchbrechung mittels einer Verschlusseinrichtung gegenüber einem Fließkanal oder einem Überlappungsstück verschließbar ist, um so eine unerwünschte Rückströmung der Stoffströme weiterer Extruder zu vermeiden, wenn der Zusatzextruder nicht im Einsatz ist. Die beispielsweise als ein Stopfen oder Schieber ausgeführte Verschlusseinrichtung verschließt dabei in der verschlossenen Position den Fließkanal konturbündig.

Um eine gute Zugänglichkeit sicherzustellen, sind vorzugsweise die Kopfteile mittels eines Antriebs, insbesondere eines Hydraulikzylinders, vorspannbar und in eine geöffnete, einen freien Zugang ermöglichende Ruheposition schwenkbar.

Die zweitgenannte Aufgabe, eine Extrusionsvorrichtung mit einer einfachen Möglichkeit zur Anordnung eines Zusatzextruders an der Extrusionsvorrichtung zu schaffen, wird erfindungsgemäß gelöst durch eine Extrusionsvorrichtung mit einem oder mehreren Extrudern und einem Spritzkopf gemäss dem Anspruch 1, der eine Durchbrechung zu zumindest einem Fließkanal oder einem zwischen der Fertigleiste und dem Fließkanal angeordneten Überlappungsstück aufweist, welche eine Schneckenwelle eines Zusatzextruders zumindest abschnittsweise aufnimmt. Hierdurch wird eine vorteilhafte Anordnung erreicht, die problemlos zu realisieren ist und zugleich den verfügbaren Raum vor der Auslassöffnung der Extrusionsvorrichtung nicht einschränkt. Insbesondere wird eine sehr kompakte Anordnung des Zusatzextruders dadurch ermöglicht, dass dessen Schneckenwelle weit, insbesondere bis kurz vor dessen Einmündung in den zugeordneten Fließkanal hineinreicht. Bei dieser Gestaltung erstreckt sich also der Prozessteil des Zusatzextruders in den Spritzkopf hinein, sodass außenseitig lediglich der Antrieb einschließlich seiner Getriebeeinheit aufgesetzt wird. Zugleich wird durch den geringen Abstand des Schneckenwellenendes des Zusatzextruders von dem Fließkanal die antriebslose Transportstrecke auf ein Minimum reduziert.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in seitlichen Schnittdarstellung in
- Fig. 1: einen Spritzkopf mit einer in einen Fließkanal einmündenden Durchbrechung;
- Fig. 2: den Spritzkopf mit einer in den Bereich eines Überlappungsstücks einmündenden Durchbrechung.

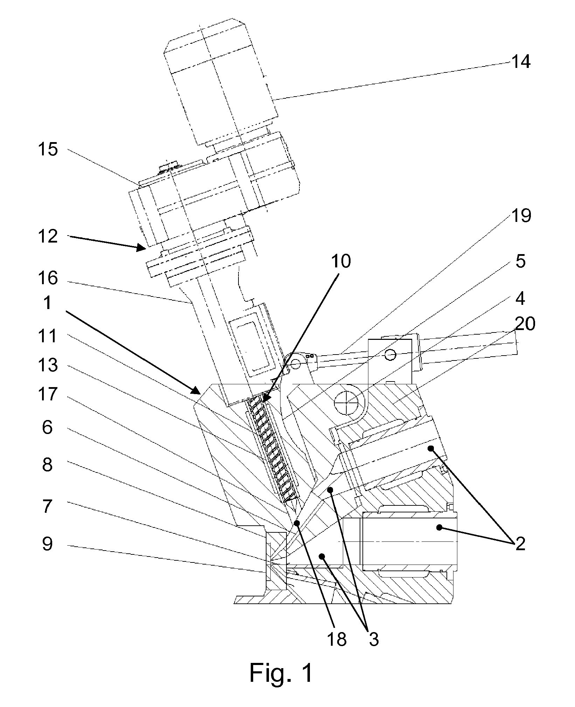

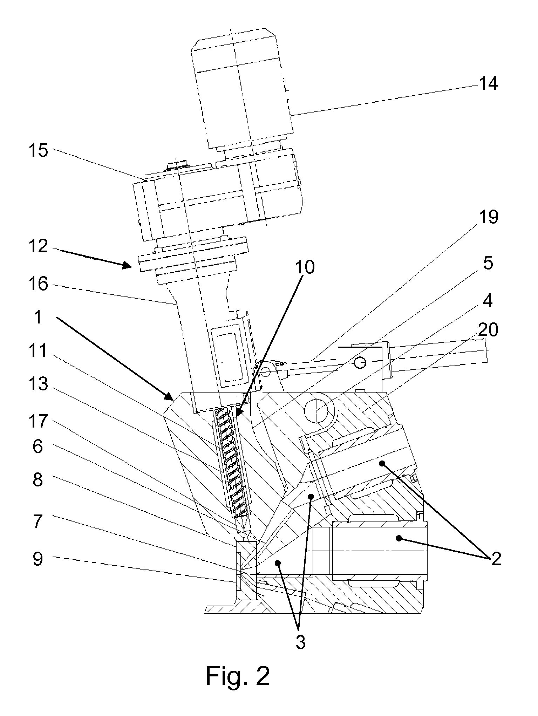

Die vorliegende Erfindung wird nachstehend anhand der Figuren 1 und 2 näher erläutert, die jeweils einen Spitzkopf 1 einer nicht weiter gezeigten, mehrere Extruder 2 vereinigenden Extrusionsvorrichtung in einer geschnittenen Seitenansicht darstellen. Zu erkennen sind mehrere, einem jeweiligen Extruder 2 zugeordnete Fließkanäle 3, die in der gezeigten Arbeitsposition von dem um ein Gelenk 4 schwenkbeweglichen Kopfteil 5 des Spritzkopfs 1 verschlossen sind. Die Stoffströme der einzelnen Extruder 2 werden mittels eines Fließkanaleinsatzes 6 in einem auch als Vorformleiste bezeichneten Überlappungsstück 7 in einer Kassette 8 zusammengeführt, aus welcher der geformte Strang durch eine den Auslass bildende Fertigleiste 9 austritt. In dem mit einem Kopfmittelteil 20 mittels eines Hydraulikzylinders 19 schwenkbeweglich verbundenen Kopfteil 5 ist eine als Bohrung ausgeführte Durchbrechung 10 angebracht, welche der Aufnahme einer Schneckenwelle 11 eines Zusatzextruders 12 dient. Hierbei ist die Schneckenwelle 11 in einer als Verschleißteil ausgelegten Zylinderhülse 13 geführt. Die Schneckenwelle 11 wird von einem Antrieb 14 mittels einer Getriebeeinheit 15 angetrieben, wobei die Zuführung des Materials mittels eines Trichterstücks 16 erfolgt. Bei Nichtgebrauch ermöglicht eine nicht gezeigte Verschlusseinrichtung das Verschließen der Durchbrechung in einem Materialkanal 17 des Zusatzextruders 12 zwischen einer Schneckenspitze und der Einmündung in einen zugeordneten Fließkanal 18. Im Unterschied zu der in Figur 1 gezeigten Variante, bei welcher die Durchbrechung 10 in den zugeordneten, von dem Kopfteil 5 verschlossenen Fließkanal 18 des Zusatzextruders 12 mündet, wird der Stoffstrom des Zusatzextruders 12 bei der in Figur 2 gezeigten Variante unmittelbar in den Bereich der Kassette 8 für das Überlappungsstück 7 eingeleitet.

## Patentansprüche

1. Ein für eine oder mehrere Komponenten bestimmter, einen Fließkanal im Extrusionsbetrieb abdeckender Spritzkopf (1) für einen oder mehrere Extruder (2), wobei der Spritzkopf (1) eine Durchbrechung (10) zu einem Fließkanal (18) des Spritzkopfs (1) und/oder einem zwischen einer Fertigleiste (9) des Spritzkopfs (1) und dem Fließkanal (18) angeordneten Überlappungsstück (7) des Spritzkopfs (1) aufweist, welche eine Schneckenwelle (11) eines Zusatzextruders (12) zumindest abschnittsweise aufnimmt, wobei der Spritzkopf (1) zumindest zwei relativ zueinander mittels eines jeweiligen Gelenks (4) schwenkbewegliche Kopfteile (5) aufweist, **dadurch gekennzeichnet, dass** die Durchbrechung (10) in zumindest einem schwenkbeweglichen Kopfteil (5) angeordnet ist, wobei die Durchbrechung (10) zylinderförmig ausgeführt ist und der Aufnahme der Schneckenwelle (11) des Zusatzextruders (12) dient, sodass der Zusatzextruder (12) gemeinsam mit dem ihn tragenden Kopfteil (5) verschwenkbar ist.

2. Spritzkopf (1) nach Anspruch 1, **dadurch gekennzeichnet, dass** die Durchbrechung (10) in einen insbesondere separaten Fließkanal (18) innerhalb eines Fließkanals (3) mündet.

3. Spritzkopf (1) nach den Ansprüchen 1 oder 2, **dadurch gekennzeichnet, dass** die Durchbrechung (10) mit einem benachbarten Fließkanal (18) einen spitzen Winkel einschließend angeordnet ist.

4. Spritzkopf (1) nach zumindest einem der vorhergehenden Ansprüche, **dadurch gekennzeichnet, dass** die Durchbrechung (10) im Wesentlichen parallel zu einer Vorderseite des Spritzkopfs (1) oder Kopfteils angeordnet ist.

5. Eine für eine oder mehrere Komponenten bestimmte Extrusionsvorrichtung mit einem oder mehreren Extrudern (2) und einem einen Fließkanal im Extrusionsbetrieb abdeckenden Spritzkopf (1) nach zumindest einem der vorhergehenden Ansprüche, mit einer in dem Spritzkopf (1) angeordneten Durchbrechung (10) zu einem Fließkanal (18) der Extrusionsvorrichtung und/oder zu einem zwischen einer Fertigleiste der Extrusionsvorrichtung und dem Fließkanal (18) angeordneten Überlappungsstück (7), wobei die Durchbrechung (10) eine Schneckenwelle (11) eines Zusatzextruders (12) zumindest abschnittsweise aufnimmt, wobei der Spritzkopf (1) zumindest zwei relativ zueinander mittels eines jeweiligen Gelenks (4) schwenkbewegliche Kopfteile (5) aufweist, wobei die zylinderförmig ausgeführte Durchbrechung (10) in einem schwenkbeweglichen Kopfteil (5) angeordnet ist und der Aufnahme der Schneckenwelle (11) des Zusatzextruders (12) dient, sodass der Zusatzextruder (12) gemeinsam mit dem ihn tragenden Kopfteil (5) verschwenkbar ist.

## Claims

1. Extrusion head (1) for one or more extruders (2), said extrusion head (1) being intended for one or more components and covering a flow duct during extrusion operation, wherein the extrusion head (1) has a through-hole (10) to a flow duct (18) of the extrusion head (1) and/or to an overlapping section (7) of the extrusion head (1), said overlapping section (7) being arranged between a termination strip (9) of the extrusion head (1) and the flow duct (18), said through-hole (10) at least partially accommodating a worm shaft (11) of an additional extruder (12), wherein the extrusion head (1) has at least two head parts (5) that are pivotable relative to one another by means of a respective joint (4), **characterized in that** the through-hole (10) is arranged in at least one pivotable head part (5), wherein the through-hole (10) is embodied in a cylindrical manner and serves to accommodate the worm shaft (11) of the additional extruder (12) such that the additional extruder (12) is pivotable together with the head part (5) carrying it.

2. Extrusion head (1) according to Claim 1, **characterized in that** the through-hole (10) leads into an in particular separate flow duct (18) within a flow duct (3).

3. Extrusion head (1) according to Claim 1 or 2, **characterized in that** the through-hole (10) is arranged so as to enclose an acute angle with an adjacent flow duct (18).

4. Extrusion head (1) according to at least one of the preceding claims, **characterized in that** the through-hole (10) is arranged in a manner substantially parallel to a front side of the extrusion head (1) or head part.

5. Extrusion device intended for one or more components, having one or more extruders (2) and an extrusion head (1), covering a flow duct during extrusion operation, according to at least one of the preceding claims, having a through-hole (10), arranged in the extrusion head (1), to a flow duct (18) of the extrusion device and/or to an overlapping section (7) arranged between a termination strip of the extrusion device and the flow duct (18), wherein the through-hole (10) at least partially accommodates a worm shaft (11) of an additional extruder (12), wherein the extrusion head (1) has at least two head parts (5) that are pivotable relative to one another by means of a respective joint (4), wherein the through-hole (10), embodied in a cylindrical manner, is arranged in a pivotable head part (5) and serves to accommodate the worm shaft (11) of the additional extruder (12), such that the additional extruder (12) is pivotable together with the head part (5) carrying it.

## Revendications

1. Tête d'injection (1) pour une ou plusieurs extrudeuses (2), définie pour un ou plusieurs composants et recouvrant un canal d'écoulement en mode d'extrusion, la tête d'injection (1) présentant une perforation (10) vers un canal d'écoulement (18) de la tête d'injection (1) et/ou vers une pièce (7) superposée à la tête d'injection (1) et disposée entre une latte de fixation (9) de la tête d'injection (1) et le canal d'écoulement (18), la perforation reprenant au moins certaines parties d'un arbre hélicoïdal (11) d'une extrudeuse supplémentaire (12), la tête d'injection (1) présentant au moins deux parties de tête (5) pouvant pivoter l'une par rapport à l'autre au moyen d'articulation (4) respectives,
**caractérisée en ce que**
la perforation (10) est disposée dans au moins une partie pivotante de tête (5),
**en ce que** la perforation (10) est cylindrique et sert à reprendre l'arbre hélicoïdal (11) de l'extrudeuse supplémentaire (12) de telle sorte que l'extrudeuse supplémentaire (12) puisse pivoter en même temps que la partie de tête (5) qui la porte.

2. Tête d'injection (1) selon la revendication 1, **caractérisée en ce que** la perforation (10) débouche dans un canal d'écoulement (18), en particulier séparé, situé à l'intérieur d'un canal d'écoulement (3).

3. Tête d'injection (1) selon les revendications 1 ou 2, **caractérisée en ce que** la perforation (10) est disposée de manière à former un angle aigu avec un canal d'écoulement (18) voisin.

4. Tête d'injection (1) selon au moins l'une des revendications précédentes, **caractérisée en ce que** la perforation (10) est disposée essentiellement parallèlement au côté avant de la tête d'injection (1) ou de la partie de tête.

5. Ensemble d'extrusion défini pour un ou plusieurs composants et présentant une ou plusieurs extrudeuses (2) ainsi qu'une tête d'injection (1) recouvrant un canal d'écoulement en mode d'extrusion selon au moins l'une des revendications précédentes, la tête d'injection (1) présentant une perforation (10) vers un canal d'écoulement (18) de la tête d'injection (1) et/ou vers une pièce (7) superposée à la tête d'injection (1) et disposée entre une latte de fixation (9) de la tête d'injection (1) et le canal d'écoulement (18), la perforation (10) reprenant au moins certaines parties d'un arbre hélicoïdal (11) d'une extrudeuse supplémentaire (12), la tête d'injection (1) présentant au moins deux parties de tête (5) pouvant pivoter l'une par rapport à l'autre au moyen d'articulation (4) respectives, la perforation (10) étant disposée dans au moins une partie pivotante de tête (5) et la perforation (10) étant cylindrique et servant à reprendre l'arbre hélicoïdal (11) de l'extrudeuse supplémentaire (12) de telle sorte que l'extrudeuse supplémentaire (12) puisse pivoter en même temps que la partie de tête (5) qui la porte.
